# EUROPEAN PATENT SPECIFICATION

(11) **EP 4 512 279 B1**
(45) Date of publication and mention of the grant of the patent: **25.02.2026**
(21) Application number: 24196105.1
(22) Date of filing: 23.08.2024
(51) Int. Cl.: A47B 77/02, A47B 96/20, F16B 12/04, F16B 11/00

(54) **KITCHEN COUNTERTOP WITH CONNECTION PROFILE**
KÜCHENARBEITSPLATTE MIT ANSCHLUSSPROFIL
PLAN DE TRAVAIL DE CUISINE AVEC PROFIL DE CONNEXION

(30) Priority: 24.08.2023 BE 202305705
(43) Date of publication of application: 26.02.2025
(73) Proprietor: Dovy Keukens nv, 8800 Roeselare (BE)
(72) Inventor: MUYLLE, Donald, 8800 Roeselare (BE)
(74) Representative: Brantsandpatents bv

(56) References cited:
- DE-A1- 102006 022 209
- DE-U1- 202005 008 536
- FR-A1- 3 106 481
- JP-A- H07 143 916

## Description

### TECHNICAL FIELD

The invention relates to a kitchen countertop as well as a method for manufacturing the kitchen countertop.

### PRIOR ART

The popularity of ceramics and composites as a material choice for kitchen countertops has increased significantly in recent years. The desire is to manufacture kitchen countertops with a thickness of 3 to 6 cm, as this provides an aesthetically pleasing appearance and a feeling of solid durability. However, the use of ceramic or composite as a material for such thick kitchen countertops is limited by the significant weight of these materials, making it practically and economically unfeasible. An additional problem is that in such thick kitchen countertops, large stresses occur in the material, causing them to easily crack.

A possible solution to this problem is to use a thinner ceramic or composite work surface, with a thin edge part added to create the visual illusion of a 3 to 6 cm thick kitchen countertop. This approach provides the desired aesthetic properties and functionality, while keeping the weight of the kitchen countertop within acceptable limits.

However, the challenge lies in developing a reliable and durable method to securely attach the two components - the work surface and the edge part - together. A commonly used method of joining two components together is by means of bonding.

Such a method is known from FR3106481 and CN101380783 (CN '783), among others. CN '783 describes an ultra-thin panel for the production of furniture and kitchen countertops. The ultra-thin panel comprises a stone panel and a honeycomb panel where an inner side of the stone panel is glued to an upper side of the honeycomb panel.

However, bonding ceramic or composite materials poses technical challenges due to the inherent properties of these materials, such as porosity and the tendency to delaminate. The bonding of a thin ceramic or composite plate to a narrow edge part traditionally takes place on a limited surface, which brings various challenges in achieving a uniform and strong connection. The limited surface area on which the bonding takes place can lead to undesirable effects, such as the adhesive dripping out, where the adhesive flows down the edge and leaves unwanted visible traces. This phenomenon is also known as bleed-out *[in Dutch: uitvloeiing].* A specific disadvantage of the CN '783 panel is the complex construction of the honeycomb panel.

Adhesive bleed-out not only negatively affects the aesthetics of the kitchen countertop, but can also lead to reduced durability and structural integrity. Adhesive build-up at the edges can result in weak spots in the joint, making the kitchen countertop less resistant to mechanical stress, thermal shock and other environmental factors. This can affect the lifespan and reliability of the kitchen countertop.

Therefore, there is a need for an optimized bonding procedure that ensures a strong bond between the ceramic or composite work surface and the edge parts, while ensuring durability and structural integrity.

### SUMMARY OF THE INVENTION

In a first aspect, the present invention relates to a device according to claim 1. Preferred embodiments of the device are shown in claims 2-8.

The proposed invention provides an optimal solution for connecting thin ceramic or composite work surfaces with one or more edge parts, thus creating a kitchen countertop with the desired appearance of thickness. The use of a frame with connecting profiles ensures a firm and durable attachment of the edge parts to the work surface. The pentagonal cross-section of the connecting profiles provides structural stability and enables an efficient adhesive bond.

The adhesive sides of the connecting profile are carefully designed with specific dimensions to ensure optimal performance. The width of the first adhesive side and the height of the second adhesive side are selected to ensure reliable adhesion between the connecting profile, the work surface and the edge part. This contributes to the structural stability and durability of the kitchen countertop.

In addition, the design allows edge parts with different heights to be bonded firmly and reliably. One connecting profile is capable of bonding different heights of edge parts, provided it is positioned correctly. This provides flexibility in designing and installing kitchen countertops with different edge heights or edge thicknesses, allowing the kitchen countertop to be adapted to individual wishes and needs.

Using suitable adhesive and capturing any excess adhesive in the internal space will ensure a neat finish and professional appearance of the kitchen countertop. In addition, the design ensures that the kitchen countertop can withstand daily stresses such as cutting, cooking and other kitchen activities, effectively preventing problems such as breakage and cracking.

In a second aspect, the present invention relates to a method according to claim 9. Preferred embodiments of the method are described in the dependent claims 10-14.

This method provides an optimized bonding procedure for producing a kitchen countertop. The internal space and the connecting profile contribute to a strong and reliable bond between the work surface and the edge parts, while effectively collecting excess adhesive. This results in a high-quality kitchen countertop that is both functional and visually appealing.

By using a thinner work surface and optimized bonding method, the total weight of the kitchen countertop is drastically reduced compared to traditional thick ceramic or composite kitchen countertops. This makes the installation more practical and simpler, and also more economically feasible.

Moreover, the method offers flexibility in design, allowing the thin work surface with added edge parts to be adapted to different styles, colors, and patterns. This enables custom and creative kitchen designs, allowing the kitchen countertop to meet the individual needs of the customer.

The miter joints between the beveled sides of the work surface and the edge parts ensure precise alignment, a uniform appearance, and improved structural integrity of the kitchen countertop. In addition, the miter joints minimize irregularities and ensure a professional finish.

Finally, the method offers the possibility to glue a fiberboard inside the frame, achieving sound insulation. This ensures a quieter kitchen countertop during use by absorbing vibrations and reducing noise levels.

In a third aspect, the present invention relates to a use according to claim 15.

This use results in optimally finished kitchen cabinets, where the kitchen countertop serves as a central element that offers both functional and aesthetic benefits. The seamless integration of the kitchen countertop creates a harmonious look, while its durability ensures a long-lasting and reliable finish.

### DESCRIPTION OF THE FIGURES

**Figure 1** shows a cross-sectional view of a connecting profile according to an embodiment of the present invention.
**Figure 2** shows a cross-sectional view of a kitchen countertop according to an embodiment of the present invention.

### DETAILED DESCRIPTION

The invention relates to a kitchen countertop as well as a method for manufacturing the kitchen countertop. In what follows, the invention is described in detail, and preferred embodiments are explained.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a kitchen countertop, comprising:
- a work surface made of natural stone, ceramic or composite, comprising a top, a bottom and sides;
- one or more edge parts made of natural stone, ceramic or composite, comprising a front and a back, the back of each edge part being provided on a side of the work surface;
- a frame glued to the bottom of the work surface;

In a preferred embodiment, the frame comprises one or more connecting profiles for connecting each edge part to the work surface, wherein the connecting profiles are glued to the bottom of the work surface, wherein a connecting profile of the frame is glued to the back of each edge part, wherein each connecting profile has a pentagonal cross-section, comprising three right angles and two obtuse angles, wherein a first right angle is connected by a first side of the connecting profile to a second right angle, wherein the second right angle is connected by a second side of the connecting profile to a third right angle, wherein the first right angle is connected by a third side of the connecting profile to a first obtuse angle thus forming a first adhesive side, wherein a third right angle is connected by a fourth side of the connecting profile to a second obtuse angle thus forming a second adhesive side, wherein a slanted side is provided between the first obtuse angle and the second obtuse angle, which slanted side is directed towards a seam between the work surface and an edge part, thus forming an internal space for collecting excess glue.

The invention provides a solution for connecting a thin ceramic or composite work surface with one or more edge parts to form a kitchen countertop. This solution is made possible by the frame, which consists of one or more profiles, including at least one connecting profile. The frame serves as an effective and efficient way to firmly connect the thin work surfaces to the edge parts, forming a durable kitchen countertop. Furthermore, the pentagonal cross-section of the connecting profiles provides structural stability and enables an efficient adhesive bond. The first adhesive side, formed by the third side of the connecting profile, ensures a reliable bond between the connecting profile and the work surface. The second adhesive side, formed by the fourth side of the connecting profile, will ensure a reliable bond between the connecting profile and the edge part. It is clear that the first adhesive side can also be glued to the edge part and that the second adhesive side can be glued to the working surface, depending on the height of the edge part. The slanted side between the two obtuse angles, together with the bottom of the work surface and the back of the edge part, forms an internal space for collecting excess glue during the gluing process, resulting in a neat and professional finish.

With this solution, the invention provides a kitchen countertop with a thinner work surface, while still having the desired appearance due to the height of the edge part. By using the frame and the connecting profiles, a thinner work surface can be used without compromising the desired look. The risk of breakage is reduced while the functionality and durability of the kitchen countertop are guaranteed. This creates a kitchen countertop that is aesthetically appealing and at the same time offers sufficient strength.

The term "frame" refers to a structure of beams, slats, profiles, connecting profiles or other sturdy materials, forming a framework or frame located on the bottom of the work surface of the kitchen countertop. This frame can consist of several sub-frames that together form a solid structure. Each sub-frame can be manufactured separately and then joined together to form the final kitchen countertop frame. This offers flexibility and customization options during the production process. The connecting profiles are part of the frame or sub-frame and are used to connect the edge parts to the work surface. These connecting profiles have a pentagonal cross-section and are glued to the bottom of the work surface and to the back of each edge part.

According to an embodiment, the second side and the third side of the connecting profile lie in the same half-space, the half-space being bounded by a plane and the first side of the connecting profile lying in said plane.

The term "half-space" refers to a three-dimensional geometric concept that defines a portion of space. It is a subspace that extends to infinity in one direction, but is bounded by a certain plane in the opposite direction. In a half-space, all points lie on one side of the bounding plane. In other words, a half-space divides three-dimensional space into two parts. If the points in the bounding plane are part of the half-space, it is called a closed half-space, and in the other case, an open half-space. In this context, the half-space is bounded by the plane in which the first side of the connecting profile lies, and the second and third sides of the connecting profile are located in the same half-space. This means that these sides are parallel to each other and extend in the same direction.

According to a preferred embodiment, the sides of the work surface provided with an edge part will comprise a beveled portion and the back of each edge part will comprise a beveled portion, the beveled portion of each edge part forming a miter joint with a beveled portion of a side of the work surface. Beveled edges and miter joints are technically considered superior to simply gluing straight edges together in the context of a kitchen countertop. In miter joints, the beveled portions of the work surface and edge parts meet at an angle, resulting in a larger joining surface. This increases the adhesion between the materials and improves the structural stability and durability of the kitchen countertop. Unlike straight edges, which can be more prone to loosening or damage, beveled edges offer better structural integrity. This makes the kitchen countertop resistant to daily stress and impact. The seamless transition between the work surface and the edge parts creates a sleek and visually appealing appearance. There are no visible glue joints or sharp corners, making the kitchen countertop look more premium. The seamless transitions make cleaning the kitchen countertop easier. There are no sharp corners or crevices where dirt such as food scraps and dust can accumulate, making cleaning easier.

According to a preferred embodiment, the first adhesive side has a width, extending from the first right angle to the first obtuse angle, of at least 3.0 cm and at most 5.0 cm, preferably at least 3.2 cm and at most 4.8 cm, more preferably at least 3.4 cm and at most 4.6 cm, even more preferably at least 3.6 cm and at most 4.4 cm, even more preferably at least 3.8 cm and at most 4.2 cm. These dimensions are intended to ensure optimum structural stability, aesthetics and functionality of the kitchen countertop. This means that the adhesive side must be wide enough to ensure a firm and stable connection between the work surface and the edge part.

According to a preferred embodiment, the second adhesive side has a height, extending from the third right angle to the second obtuse angle, of at least 1.0 cm and at most 2.0 cm, preferably at least 1.2 cm and at most 1.8 cm, and more preferably at least 1.4 cm and at most 1.6 cm. This height ensures that there is enough space to create a strong connection between the work surface and the edge part.

According to a preferred embodiment, the edge part has a cross-sectional height, extending from a top of the edge part to a bottom of the edge part, which is at least equal to a height of the first side plus a height of the work surface or a width of the second side plus a height of the work surface and is at most 5 cm, preferably at most 4 cm, more preferably at most 3 cm, even more preferably at most 2 cm and even more preferably at most 1 cm greater than the minimum height. This allows the kitchen countertop to withstand daily stresses such as cutting, cooking and other kitchen activities without any problems. If the edge part were larger, there would be a risk of breakage or damage to the kitchen countertop. Using the correct height dimensions ensures the structural integrity and durability of the kitchen countertop. If the edge part is smaller than the prescribed height dimensions, the connecting profile will remain visible.

According to a preferred embodiment, each connecting profile of the frame is hollow. A hollow connecting profile refers to a connecting profile where the interior of the material has been hollowed out, creating an internal space or opening. Unlike a solid profile, where the material continues without internal space, a hollow profile has an empty space on the inside. The hollow design of the connecting profile helps to reduce the weight of the kitchen countertop. The use of hollow profiles can reduce the overall weight of the kitchen countertop, which can be useful for installation, transportation and general handling. In addition, the hollow design of the connecting profiles can also contribute to a more efficient use of materials and more sustainable production. It will reduce the amount of material required and potentially reduce the costs and environmental impact of the production process. It should be noted that the aforementioned angles are measured along the inside of the hollow connecting profile. Alternatively, if necessary, it can be chosen to manufacture connecting profiles of the frame from a solid material.

According to an embodiment there is a groove on at least one side of the connecting profile, on the inside of the hollow connecting profile. This groove runs the entire length of the connecting profile. The presence of the groove can give the structure additional strength and stiffness. Adding a groove effectively increases the surface area, allowing for better stress distribution and preventing deformation or bending under load.

In a preferred embodiment, each connecting profile is constructed of a durable and strong material, such as aluminum, stainless steel, or other suitable metal. These materials provide the required strength and stability for the connecting profiles, allowing them to effectively contribute to the bonding and structural integrity of the kitchen countertop.

According to a preferred embodiment, each connecting profile is an extruded profile. The use of extruded profiles offers advantages such as consistency in shape and dimensions, high strength and structural stability. The extruded design allows for the creation of complex shapes with precise dimensions and angles, which is essential for good adhesion and bonding between the work surface and the edge parts of the kitchen countertop.

According to a preferred embodiment, the work surface and the edge part are made of the same material. By using the same material for both the work surface and the edge part, a seamless and harmonious look is created, with no visible color or texture differences between the two components. In addition, using the same material offers advantages in terms of durability and maintenance. Materials such as ceramic or composite are often chosen for their high strength, scratch resistance and heat resistance. By manufacturing both the work surface and the edge part from the same durable materials, consistent and uniform performance is delivered in terms of durability, resistance to daily wear and tear and ease of maintenance. In addition, using the same material for both the work surface and the edge part can also facilitate workability and compatibility during the production process. It makes it easier to achieve consistent glue joints and miter joints between components, contributing to the structural integrity and aesthetics of the kitchen countertop.

According to an alternative embodiment, the work surface and the edge part are made of different materials. Using different materials for the work surface and the edge part can provide different design possibilities and aesthetic effects. For example, the work surface can be made of ceramic for its durability, heat resistance, and scratch resistance, while the edge part can be made of another material to create a contrasting design or to meet specific aesthetic preferences. However, it is important to ensure that the chosen materials are compatible with each other and suitable for the intended application. Factors such as structural integrity, durability, ease of maintenance, and consistency in performance must be taken into account when selecting materials.

According to a preferred embodiment, the work surface and/or the one or more edge parts are made of ceramic or composite. This choice offers several advantages that contribute to the functionality and aesthetics of the kitchen countertop. First, ceramics and composites offer a wide range of design possibilities. They can be manufactured in a variety of colors, patterns and textures, making them a perfect match for various kitchen styles and designs. In addition, ceramics and composites are known for their durability. They are resistant to wear, scratches, stains and high temperatures, making them suitable for intensive use in the kitchen. These materials retain their quality and appearance for a long time. Furthermore, hygiene is an important aspect in the kitchen, and ceramic and composite meet this requirement. They are non-porous, meaning they will not absorb liquids or dirt. This makes them easy to clean and maintain. Finally, resistance to chemicals is also an important advantage of ceramics and composites. They are resistant to common household chemicals, such as acids and cleaning agents. This ensures that the kitchen countertop retains its quality, even with regular cleaning and exposure to various substances.

According to an alternative embodiment, the work surface and/or the one or more edge parts are made of natural stone. Using natural stone as a material for the work surface and/or the edge parts of a kitchen countertop offers several advantages. Natural stone, such as granite or marble, is durable, heat-resistant and has a natural and elegant appearance. With unique patterns, colors and textures, natural stone adds visual appeal to the kitchen space. It is easy to clean and maintain, and the versatility of natural stone provides options to suit different style preferences. Although natural stone requires some maintenance and can be susceptible to stains, using it will give the kitchen countertop a luxurious and timeless look.

According to a preferred embodiment, the kitchen countertop further comprises a fiberboard placed inside the frame against the bottom of the work surface, which fiberboard is suitable for dampening sound.

"Inside the frame" refers to the space surrounded by the structure of beams, slats, profiles, connecting profiles or other sturdy materials that together form the frame. It means that the fiberboard is located on the bottom of the work surface and between the inside of the frame, in the space defined by the frame construction. If the frame contains multiple sub-frames, the fiberboard can be placed inside a sub-frame. This means that the fiberboard is on the bottom of the work surface and on the inside of a specific sub-frame, while there may be multiple sub-frames in the overall frame of the kitchen countertop. Preferably, a fiberboard is placed inside each sub-frame.

The fiberboard has the property of dampening sound waves and vibrations caused by daily activities on the kitchen countertop, such as cutting food, placing dishes and using kitchen appliances. This significantly reduces the overall noise level in the kitchen. The fiberboard improves the acoustics in the kitchen space by reducing reverberation and echoes, making the sound quality more pleasant when using the kitchen countertop. In addition to sound insulation, the fiberboard also has vibration-damping properties. It absorbs vibrations that can arise from the use of kitchen appliances, such as mixers or blenders. This creates a quieter and more stable work surface. This contributes to an increased level of comfort when using the kitchen countertop and provides a quieter and more stable environment in the kitchen. Alternatively, other sound-absorbing panels can also be used. These panels can consist of materials such as perforated wood, acoustic fibers, foam insulation materials or other sound-absorbing materials.

In a second aspect, the invention relates to a method for manufacturing a kitchen countertop made of ceramic, composite or natural stone.

The method begins with providing a work surface made of ceramic or composite, which includes a top, bottom and sides. Next, a frame is glued to the bottom of the work surface. Then one or more edge parts, also made of ceramic, composite or natural stone, are provided on one or more sides of the work surface.

According to a preferred embodiment, a back of each edge part is connected to the work surface via a connecting profile included in the frame. A first adhesive side of the connecting profile is glued to the bottom of the work surface, while a second adhesive side is glued to the back of the edge part. The connecting profile has a slanted side that is facing the seam between the work surface and the edge part. This creates an internal space between the bottom of the work surface, the back of the edge part and the slanted side of the connecting profile, which serves to catch any excess glue. This specific aspect of the process provides a firm and reliable bond between the work surface and the edge parts. The internal space between the various components provides a buffer for excess glue, reducing the chance of bleed-out and unwanted visible traces.

This method therefore applies an optimized bonding procedure, ensuring durability, structural integrity and aesthetics. The internal space and the connecting profile contribute to a strong and reliable bond between the work surface and the edge parts, while effectively collecting excess adhesive. This results in a high-quality kitchen countertop that is both functional and visually appealing.

The proposed method therefore offers several advantages that optimize the kitchen countertop both technically and aesthetically. Firstly, the kitchen countertop is resistant to heavy mechanical loads, thermal shocks, and other environmental factors. This is because the optimized bonding procedure creates a strong bond between the thin ceramic or composite work surface and the added edge parts. The structural integrity of the kitchen countertop is thus maintained for a long period of time. By using a thinner work surface in combination with the visual illusion of a thicker kitchen countertop, the kitchen countertop is given a luxurious look. In addition, the bonding procedure minimizes glue bleed-out and prevents visible traces, giving the kitchen countertop a solid, uniform and seamless appearance. This contributes to a high-quality aesthetic that exudes a sense of luxury and quality.

A significant weight saving is an additional benefit of the proposed bonding procedure. By choosing a thinner work surface and optimized bonding method, the total weight of the kitchen countertop is drastically reduced compared to traditional thick ceramic or composite kitchen countertops. This not only makes installation more practical and simple, but also more economically feasible. Finally, the bonding procedure offers flexibility in design. The thin work surface with the added edge parts can be customized to different styles, colors and patterns, allowing for custom kitchen designs. This opens up possibilities for creativity and personalization in kitchen interiors, allowing the kitchen countertops to meet both the functional and aesthetic needs of the individual customer.

According to a preferred embodiment, the method comprises the additional steps of beveling the sides of the work surface provided with an edge part, as well as beveling the back of each edge part, which beveled back of each edge part is positioned against a beveled side of the work surface to form a miter joint.

The miter joint has the advantage that it is easier and more accurate to place the beveled sides against each other than, for example, with straight edges. The slanted shape creates a guiding direction that helps position the edge parts relative to the work surface. This makes installation easier and ensures more precise alignment of the work surface and the edge parts. The slanted shape allows less room for error when placing the edge parts. Reducing any gaps or deviations between the edge parts and the work surface results in a better fit and a more uniform appearance. This adds to the aesthetics of the kitchen countertop and provides a professional finish. Additionally, using miter joints reduces the chance of misalignment or uneven transitions between the edge parts and the work surface. The beveled sides provide a gradual transition and minimize the risk of irregularities. This results in a flat and balanced surface, which is essential for a well-functioning and visually appealing kitchen countertop. In addition, the miter joint increases the structural integrity of the kitchen countertop. By positioning the beveled back of each edge part against a beveled side of the work surface, a strong connection is created that can withstand loads and stresses. This enhances the durability and stability of the kitchen countertop, making it resistant to daily use and any external forces.

According to a preferred embodiment, a layer of a suitable adhesive is applied to the first adhesive side of the connecting profile or the second adhesive side of the connecting profile, after which the first adhesive side of the connecting profile or the second adhesive side of the connecting profile, respectively, is glued to the bottom of the work surface.

According to a further embodiment, a layer of the suitable adhesive is applied to a remaining one of the first adhesive side of the connecting profile and the second adhesive side of the connecting profile, after which the back of the edge part is glued to the remaining adhesive side. This offers the possibility to securely and reliably attach edge parts with different heights to the work surface. By positioning the connecting profile correctly, the desired adhesive side with the correct dimensions can be placed against the edge part of the correct height. This increases flexibility in designing and installing kitchen countertops, allowing for customization.

According to a preferred embodiment, the suitable adhesive is selected from a group consisting of epoxy adhesive, polyurethane adhesive, acrylic adhesive or silicone adhesive. Epoxy adhesive provides excellent adhesion and strength, polyurethane adhesive is flexible and resistant to movement, acrylic adhesive has fast adhesion and curing time, and silicone adhesive is flexible, water and heat resistant. By choosing the right adhesive, optimal adhesion and durability can be achieved, making the kitchen countertop resistant to loads, temperature changes and other environmental factors.

In a preferred embodiment, the method further comprises bonding a fiberboard inside the frame. The fiberboard has the property of dampening sound. It absorbs vibrations and reduces noise levels, making the kitchen countertop quieter during use.

In a third aspect, the invention relates to a use of the kitchen countertop according to the first aspect of the invention or the method according to the second aspect of the invention for finishing kitchen cabinets.

This means that the kitchen countertop, which is designed according to the invention, can be used to finish kitchen cabinets in a high-quality and durable manner. The kitchen countertop offers a seamless and luxurious look that fits perfectly with a variety of kitchen styles. Furthermore, it is to be noted that the invention is not limited to kitchen countertops alone. For example, it can also be used to produce a washbasin top or bathroom top or other applications where a thin surface is required.

A person of ordinary skill in the art will appreciate that the method according to the second aspect of the present invention can be used to produce a kitchen countertop according to the first aspect of the present invention. To this end, each feature described both above and below may relate to either of the two aspects, even when the feature is described in conjunction with a particular aspect of the present invention.

In what follows, the invention is described by means of non-limiting figures illustrating the invention, and are not intended or to be interpreted as limiting the scope of the invention.

### FIGURES

- 1 =: work surface
- 2 =: top of the work surface
- 3 =: bottom of the work surface
- 4 =: edge part
- 5 =: front of the edge part
- 6 =: back of the edge part
- 7 =: connecting profile
- 8 =: first side of the connecting profile
- 9 =: second side of the connecting profile
- 10 =: third side of the connecting profile
- 11 =: first adhesive side
- 12 =: fourth side of the connecting profile
- 13 =: second adhesive side
- 14 =: slanted side of the connecting profile
- 15 =: seam between the work surface and the edge part
- 16 =: internal space
- 17 =: beveled back of the edge part
- 18 =: beveled side of the work surface
- 19 =: top of the edge part
- 20 =: bottom of the edge part
- 21 =: groove
- 22 =: width direction connecting profile
- 23 =: height direction connecting profile
- 24 =: width direction kitchen countertop
- 25 =: height direction kitchen countertop
- α₁=: first right angle
- α₂=: second right angle
- α₃ =: third right angle
- β₁ =: a first obtuse angle
- β₂ =: a second obtuse angle

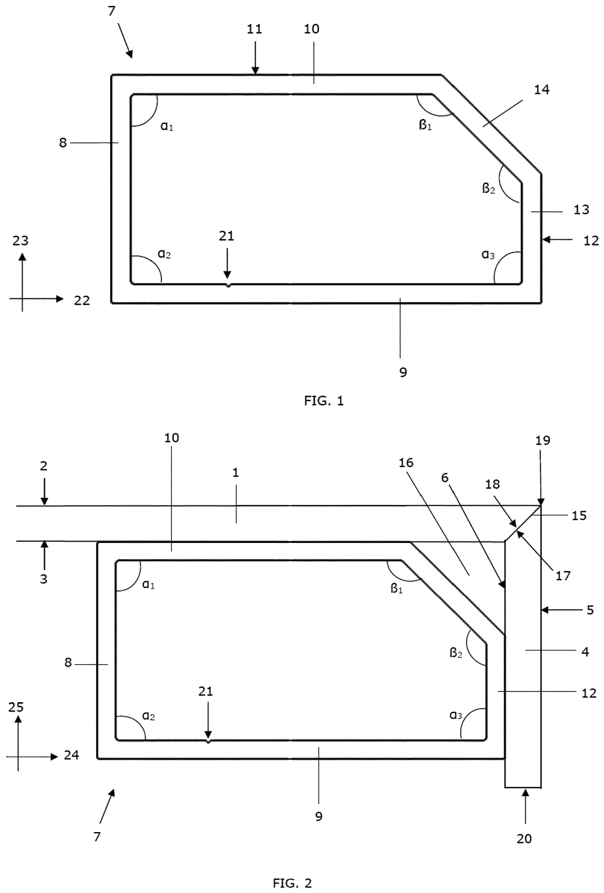

Figure 1 shows a cross-sectional view of a connecting profile. The connecting profile (7) ensures the connection of the work surface (1) with the edge part (4) of the kitchen countertop.

The connecting profile (7) has a pentagonal cross-section and consists of various sides and angles.

The first right angle (α₁) is connected by the first side (8) of the connecting profile (7) with the second right angle (α₂).

The second right angle (α₂) is connected to the third right angle (α₃) by the second side (9) of the connecting profile (7).

The first right angle (α₁) is connected to the first obtuse angle (β₁) by the third side (10) of the connecting profile (7), thus forming a first adhesive side (11).

The third right angle (α₃) is connected by the fourth side of the connecting profile (12) to the second obtuse angle (β₂), thus forming a second adhesive side (13).

The slanted side (14) is provided between the first obtuse angle (β₁) and the second obtuse angle (β₂).

Additionally, the figure also shows the notch (21) that is provided on the inside of the hollow connecting profile. Moreover, the directions of the width (22) and height (23) are indicated to clarify the orientation of the various elements.

Figure 2 shows a cross-sectional view of a kitchen countertop consisting of a work surface (1), an edge part (4), and a connecting profile (7).

The work surface (1) will form the top portion of the kitchen countertop. The work surface (1) is made of ceramic, composite, or natural stone and has a substantially flat top (2) on which kitchen activities can take place.

To create the desired aesthetic appearance of a thick kitchen countertop, an edge part (4) is attached to the work surface (1). This edge part (4) is also made of ceramics, composite, or natural stone and has a front (5) that is visible at the front of the kitchen countertop.

To realize the connection between the work surface (1) and the edge part (4), a connecting profile (7) is used. This connecting profile (7) is part of a frame that is glued to the bottom (3) of the work surface (1). The connecting profile (7) has the pentagonal cross-section with three right angles (α₁, α₂, α₃) and two obtuse angles (β₁, β₂). The third side (10) of the connecting profile (7) is glued to the bottom of the work surface (3). The fourth side (12) of the connecting profile (7) is connected to the back (6) of the edge part (4), resulting in a strong connection.

Between the first (β₁) and second (β₂) obtuse angle lies the slanted side (14) of the connecting profile (7). This slanted side (14) is directed towards the seam (15) between the work surface (1) and the edge part (4). This creates an internal space (16) that serves to collect excess glue, thereby preventing unwanted bleed-out of the glue.

In addition, the figure also shows the beveled back (17) of the edge part (4), which forms a miter joint with the beveled side (18) of the work surface (1). This creates a seamless transition between the working surface (1) and the edge part (4).

Furthermore, the top (19) and bottom (20) of the edge part (4) are shown, together with a notch (21) provided on the inside of the hollow connecting profile (7). The directions of width (24) and height (25) are also indicated to clarify the orientation of the various elements. It should be noted that the two coordinate systems, namely the system (22,23) of the connecting profile (7) and the system (24,25) of the kitchen countertop, can differ in orientation.

## Claims

1. A kitchen countertop, comprising:
- a work surface (1) made of natural stone, ceramic or composite, comprising a top (2), a bottom (3) and sides;
- one or more edge parts (4) made of natural stone, ceramic or composite, comprising a front (5) and a back (6), the back (6) of each edge part (4) being provided on a side of the work surface (1);
- a frame glued to the bottom (3) of the work surface (1);
**characterized in that** the frame comprises one or more connecting profiles (7) for connecting each edge part (4) to the work surface (1), wherein the connecting profiles (7) are glued to the bottom (3) of the work surface (1), wherein a connecting profile (7) is glued to the back (6) of each edge part (4), wherein each connecting profile (7) has a pentagonal cross-section, comprising three right angles (α₁, α₂, α₃) and two obtuse angles (β₁, β₂), wherein a first right angle (α₁) is connected by a first side (8) of the connecting profile (7) to a second right angle (α₂), wherein the second right angle (α₂) is connected by a second side (9) of the connecting profile (7) to a third right angle (α₃), wherein the first right angle (α₁) is connected by a third side (10) of the connecting profile (7) to a first obtuse angle (β₁), thus forming a first adhesive side (11), wherein a third right angle (α₃) is connected by a fourth side (12) of the connecting profile (7) to a second obtuse angle (β₂), thus forming a second adhesive side (13), wherein a slanted side (14) is provided between the first obtuse angle (β₁) and the second obtuse angle (β₂), which slanted side (14) is directed towards a seam (15) between the work surface (1) and an edge part (4), thus forming an internal space (16) for collecting excess glue.

2. The kitchen countertop according to claim 1, **characterized in that** sides of the work surface (1) provided with an edge part (4) comprise a beveled part, and **in that** the back (6) of each edge part (4) comprises a beveled part (17), wherein the beveled part (17) of each edge part (4) forms a miter joint with a beveled part (18) of a side of the work surface (1).

3. The kitchen countertop according to claim 1 or 2, **characterized in that** the first adhesive side (11) has a width extending from the first right angle (α₁) to the first obtuse angle (β₁), of at least 3.0 cm and at most 5.0 cm.

4. The kitchen countertop according to any of claims 1 to 3, **characterized in that** the second adhesive side (13) has a height, extending from the third right angle (α₃) to the second obtuse angle (β₂), of at least 1.0 cm and at most 2.0 cm.

5. The kitchen countertop according to claim 3 and 4, **characterized in that** the edge part (4) has a cross-sectional height, extending from a top (19) of the edge part (4) to a bottom (20) of the edge part (4), which is at least equal to a height of the first side (8) plus a height of the work surface (1) or a width of the second side (9) plus a height of the work surface (1) and is at most 5 cm greater than the minimum height.

6. Kitchen countertop according to any of claims 1 to 5, **characterized in that** each connecting profile (7) of the frame is hollow.

7. The kitchen countertop according to any of the preceding claims 1 to 6, **characterized in that** the working surface (1) and the edge part (4) are made of the same material.

8. The kitchen countertop according to any of claims 1 to 7, **characterized in that** the kitchen countertop further comprises a fiberboard placed inside the frame against the bottom (3) of the work surface (1), which fiberboard is suitable for dampening sound.

9. Method for manufacturing a kitchen countertop made of natural stone, ceramic, or composite, comprising the steps of providing a work surface (1) made of ceramic, composite, or natural stone, wherein the work surface (1) comprises a top (2), a bottom (3) and sides; gluing a frame to the bottom (3) of the work surface (1); and providing one or more edge parts (4) made of ceramic, composite or natural stone on one or more sides of the work surface (1), **characterized in that** one back (6) of each edge part (4) is connected to the work surface (1) via a connecting profile (7) included in the frame, wherein a first adhesive side (11) of the connecting profile (7) is glued to the bottom (3) of the work surface (1), wherein a second adhesive side (13) is glued to a back (6) of the edge part (4), wherein the connecting profile (7) comprises a slanted side (14), wherein the slanted side (14) of the connecting profile (7) is directed towards a seam (15) between the work surface (1) and the edge part (4), thereby creating an internal space (16) between the bottom (3) of the work surface (1), the back (6) of the edge part (4), and the slanted side (14) of the connecting profile (7) for collecting excess glue.

10. The method according to claim 9, **characterized in that** the method comprises the additional steps of beveling the sides of the work surface (1) provided with an edge part (4), as well as of beveling the back (6) of each edge part (4), which beveled back (17) of each edge part (4) is positioned against a beveled side (18) of the work surface (1) to form a miter joint.

11. The method according to claim 9 or 10, **characterized in that** a layer of a suitable adhesive is applied to the first adhesive side (11) of the connecting profile (7) or the second adhesive side (13) of the connecting profile (7), after which the first adhesive side (11) of the connecting profile (7) or the second adhesive side (13) of the connecting profile (7) is glued to the bottom (3) of the work surface (1).

12. The method according to claim 11, **characterized in that** a layer of the suitable adhesive is applied to a remaining one of the first adhesive side (11) of the connecting profile (7) and the second adhesive side (13) of the connecting profile (7), after which the back (6) of the edge part (4) is glued to the remaining adhesive side.

13. The method according to any of the preceding claims 11 or 12, **characterized in that** the suitable adhesive is selected from a group consisting of epoxy adhesive, polyurethane adhesive, acrylic adhesive or silicone adhesive.

14. The method according to any of the preceding claims 9 to 13, **characterized in that** the method further comprises gluing a fiberboard inside the frame.

15. Use of the kitchen countertop according to any of claims 1 to 8 or the method according to any of claims 9 to 14 for finishing kitchen cabinets.

## Patentansprüche

1. Küchenarbeitsplatte, Folgendes umfassend:
- eine Arbeitsfläche (1), die aus Naturstein, Keramik oder Verbundstoff besteht, eine Oberseite (2), eine Unterseite (3) und Seiten umfassend;
- ein oder mehrere Randteile (4), die aus Naturstein, Keramik oder Verbundstoff bestehen, eine Vorderseite (5) und eine Rückseite (6) umfassend, wobei die Rückseite (6) jedes Randteils (4) an einer Seite der Arbeitsfläche (1) bereitgestellt ist;
- einen Rahmen, der an die Unterseite (3) der Arbeitsfläche (1) geklebt ist;
**dadurch gekennzeichnet dass** der Rahmen ein oder mehrere Verbindungsprofile (7) zum Verbinden jedes Randteils (4) mit der Arbeitsfläche (1) umfasst, wobei die Verbindungsprofile (7) an die Unterseite (6) der Arbeitsfläche (1) geklebt sind, wobei ein Verbindungsprofil (7) an die Rückseite (6) jedes Randteils (4) geklebt ist, wobei jedes Verbindungsprofil (7) einen fünfeckigen Querschnitt aufweist, der drei rechte Winkel (α₁, α₂, α₃) und zwei stumpfe Winkel (β₁, β₂) umfasst, wobei ein erster rechter Winkel (α₁) durch eine erste Seite (8) des Verbindungsprofils (7) mit einem zweiten rechten Winkel (α₂) verbunden ist, wobei der zweite rechte Winkel (α₂) durch eine zweite Seite (9) des Verbindungsprofils (7) mit einem dritten rechten Winkel (α₃), wobei der erste rechte Winkel (α₁) durch eine dritte Seite (10) des Verbindungsprofils (7) mit einem ersten stumpfen Winkel (β₁) verbunden ist, wodurch eine erste Haftseite (11) gebildet ist, wobei ein dritter rechter Winkel (α₃) durch eine vierte Seite (12) des Verbindungsprofils (7) mit einem zweiten stumpfen Winkel (β₂) verbunden ist, wodurch eine zweite Haftseite (13) gebildet ist, wobei zwischen dem ersten stumpfen Winkel (β₁) und dem zweiten stumpfen Winkel (β₂) eine schräge Seite (14) bereitgestellt ist, wobei die schräge Seite (14) zu einer Verbindungsnaht (15) zwischen der Arbeitsfläche (1) und einem Randteil (4) gerichtet ist, wodurch ein innerer Zwischenraum (16) zum Aufnehmen überschüssigen Klebers gebildet ist.

2. Küchenarbeitsplatte nach Anspruch 1, **dadurch gekennzeichnet dass** Seiten der Arbeitsfläche (1), die mit einem Randteil (4) versehen sind, einen abgeschrägten Teil umfassen, und dadurch, dass die Rückseite (6) jedes Randteils (4) einen abgeschrägten Teil (17) umfasst, wobei der abgeschrägte Teil (17) jedes Randteils (4) mit dem abgeschrägten Teil (18) einer Seite der Arbeitsfläche (1) eine Gehrung bildet.

3. Küchenarbeitsplatte nach Anspruch 1 oder 2, **dadurch gekennzeichnet dass** die erste Haftseite (11) eine Breite von mindestens 3.0 cm und höchstens 5.0 cm aufweist, die sich von dem ersten rechten Winkel (α₁) zu dem ersten stumpfen Winkel (β₁) erstreckt.

4. Küchenarbeitsplatte nach einem der Ansprüche 1 bis 3, **dadurch gekennzeichnet dass** die zweite Haftseite (13) eine Höhe von mindestens 1,0 cm und höchstens 2.0 cm aufweist, die sich von dem dritten rechten Winkel (α₃) zu dem zweiten stumpfen Winkel (β₂) erstreckt.

5. Küchenarbeitsplatte nach Anspruch 3 und 4, **dadurch gekennzeichnet dass** der Randteil (4) eine Querschnittshöhe aufweist, die sich von einer Oberseite (19) des Randteils (4) zu einer Unterseite (20) des Randteils (4) erstreckt und die mindestens gleich einer Höhe der ersten Seite (8) plus eine Höhe der Arbeitsfläche (1) oder einer Breite der zweiten Seite (90) plus eine Höhe der Arbeitsfläche (1) ist und höchstens 5 cm mehr als die minimale Höhe beträgt.

6. Küchenarbeitsplatte nach einem der Ansprüche 1 bis 5, **dadurch gekennzeichnet dass** jedes Verbindungsprofil (7) des Rahmens hohl ist.

7. Küchenarbeitsplatte nach einem der vorhergehenden Ansprüche 1 bis 6, **dadurch gekennzeichnet dass** die Arbeitsfläche (1) und das Randteil (4) aus dem gleichen Material bestehen.

8. Küchenarbeitsplatte nach einem der Ansprüche 1 bis 7, **dadurch gekennzeichnet dass** die Küchenarbeitsplatte ferner eine Faserplatte umfasst, die innerhalb des Rahmens an der Unterseite (3) der Arbeitsfläche (1) platziert ist, wobei die Faserplatte geeignet ist, Geräusche zu dämpfen.

9. Verfahren zur Herstellung einer Küchenarbeitsplatte, die aus Naturstein, Keramik oder Verbundstoff besteht, umfassend die Schritte des Bereitstellens einer Arbeitsfläche (1), die aus Keramik, Verbundstoff oder Naturstein besteht, wobei die Arbeitsfläche (1) eine Oberseite (2), eine Unterseite (3) und Seiten umfasst, des Klebens eines Rahmens an die Unterseite (3) der Arbeitsfläche (1); und des Bereitstellens eines oder mehrerer Randteile (4), die aus Keramik, Verbundstoff oder Naturstein bestehen, an einer oder mehreren Seiten der Arbeitsfläche (1) umfassend, **dadurch gekennzeichnet dass** eine Rückseite (6) jedes Randteils (4) mittels eines Verbindungsprofils (7), das in dem Rahmen enthalten ist, mit der Arbeitsfläche (1) verbunden wird, wobei eine erste Haftseite (11) des Verbindungsprofils (7) an die Unterseite (3) der Arbeitsfläche (1) geklebt wird, wobei eine zweite Haftseite (13) an eine Rückseite (6) des Randteils (4) geklebt wird, wobei das Verbindungsprofil (7) eine schräge Seite (14) umfasst, wobei die schräge Seite (14) des Verbindungsprofils (7) zu einer Verbindungsnaht (15) zwischen der Arbeitsfläche (1) und einem Randteil (4) ausgerichtet ist, wodurch zwischen der Unterseite (3) der Arbeitsfläche (1), der Rückseite (6) des Randteils (4) und der schrägen Seite (14) des Verbindungsprofils (7) ein innerer Zwischenraum (16) zum Aufnehmen überschüssigen Klebers erzeugt wird.

10. Verfahren nach Anspruch 9, **dadurch gekennzeichnet dass** das Verfahren die zusätzlichen Schritte des Abschrägens der Seiten der Arbeitsfläche (1), die mit einem Randteil (4) versehen werden, wie auch des Abschrägens der Rückseite (6) jedes Randteils (4) umfasst, wobei die abgeschrägte Rückseite (17) jedes Randteils (4) an einer abgeschrägten Seite (18) der Arbeitsfläche (1) positioniert wird, um eine Gehrung zu bilden.

11. Verfahren nach Anspruch 9 oder 10, **dadurch gekennzeichnet dass** eine Schicht aus einem geeigneten Haftstoff auf die erste Haftseite (11) des Verbindungsprofils (7) oder die zweite Haftseite (13) des Verbindungsprofils (7) aufgebracht wird, wonach die erste Haftseite (11) des Verbindungsprofils (7) oder die zweite Haftseite (13) des Verbindungsprofils (7) an die Unterseite (3) der Arbeitsfläche (1) geklebt wird.

12. Verfahren nach Anspruch 11, **dadurch gekennzeichnet dass** eine Schicht des geeigneten Haftstoffs auf eine entsprechende verbleibende Seite der ersten Haftseite (11) des Verbindungsprofils (7) und der zweiten Haftseite (13) des Verbindungsprofils (7) aufgetragen wird, wonach die Rückseite (6) des Randteils (4) an die verbleibende Haftseite geklebt wird.

13. Verfahren nach einem der vorhergehenden Ansprüche 11 oder 12, **dadurch gekennzeichnet dass** der geeignete Haftstoff aus einer Gruppe ausgewählt wird, die aus Epoxidhaftstoff, Polyurethanhaftstoff, Acrylhaftstoff und Silikonhaftstoff besteht.

14. Verfahren nach einem der vorhergehenden Ansprüche 9 bis 13, **dadurch gekennzeichnet dass** das Verfahren ferner das Einkleben einer Faserplatte innerhalb des Rahmens umfasst.

15. Verwendung der Küchenarbeitsplatte nach einem der Ansprüche 1 bis 8 oder des Verfahrens nach einem der Ansprüche 9 bis 14 zum Ausrüsten von Küchenschränken.

## Revendications

1. Comptoir de cuisine, comprenant:
- un plan de travail (1) en pierre naturelle, en céramique ou en composite, comprenant un dessus (2), un dessous (3) et des côtés ;
- une ou plusieurs parties de bord (4) en pierre naturelle, en céramique ou en composite, comprenant un avant (5) et un dos (6), le dos (6) de chaque partie de bord (4) étant situé sur un côté du plan de travail (1);
- un cadre collé au dessous (3) du plan de travail (1);
**caractérisé en ce que** le cadre comprend un ou plusieurs profilés de liaison (7) pour relier chaque partie de bord (4) au plan de travail (1), dans lequel les profilés de liaison (7) sont collés au dessous (3) du plan de travail (1), dans lequel un profilé de liaison (7) est collé au dos (6) de chaque partie de bord (4), dans lequel chaque profilé de liaison (7) a une section transversale pentagonale, comprenant trois angles droits (α₁, α₂, α₃) et deux angles obtus (β₁, β₂), dans lequel un premier angle droit (α₁) est relié par un premier côté (8) du profilé de liaison (7) à un deuxième angle droit (α₂), dans lequel le deuxième angle droit (α₂) est relié par un deuxième côté (9) du profilé de liaison (7) à un troisième angle droit (α₃), dans lequel le premier angle droit (α₁) est relié par un troisième côté (10) du profilé de liaison (7) à un premier angle obtus (β₁), formant ainsi une première face adhésive (11), dans lequel un troisième angle droit (α₃) est relié par un quatrième côté (12) du profilé de liaison (7) à un second angle obtus (β₂), formant ainsi une seconde face adhésive (13), dans lequel un côté incliné (14) est prévu entre le premier angle obtus (β₁) et le second angle obtus (β₂), lequel côté incliné (14) est dirigé vers un joint (15) entre le plan de travail (1) et une partie de bord (4), formant ainsi un espace interne (16) destiné à recueillir l'excès de colle.

2. Comptoir de cuisine selon la revendication 1, **caractérisé en ce que** des côtés du plan de travail (1) pourvus d'une partie de bord (4) comprennent une partie biseautée, et **en ce que** le dos (6) de chaque partie de bord (4) comprend une partie biseautée (17), dans lequel la partie biseautée (17) de chaque partie de bord (4) forme un joint d'onglet avec une partie biseautée (18) d'un côté du plan de travail (1).

3. Comptoir de cuisine selon la revendication 1 ou 2, **caractérisé en ce que** le premier côté adhésif (11) a une largeur s'étendant du premier angle droit (α₁) au premier angle obtus (β₁), d'au moins 3.0 cm et d'au plus 5.0 cm.

4. Comptoir de cuisine selon l'une quelconque des revendications 1 à 3, **caractérisé en ce que** le second côté adhésif (13) a une hauteur, s'étendant du troisième angle droit (α₃) au second angle obtus (β₂), d'au moins 1.0 cm et d'au plus 2.0 cm.

5. Comptoir de cuisine selon les revendications 3 et 4, **caractérisé en ce que** la partie de bord (4) a une hauteur transversale, s'étendant d'un haut (19) de la partie de bord (4) à un bas (20) de la partie de bord (4), qui est au moins égale à une hauteur du premier côté (8) plus une hauteur du plan de travail (1) ou à une largeur du deuxième côté (9) plus une hauteur du plan de travail (1) et est au plus 5 cm plus grande que la hauteur minimale.

6. Comptoir de cuisine selon l'une quelconque des revendications 1 à 5, **caractérisé en ce que** chaque profilé de liaison (7) du cadre est creux.

7. Comptoir de cuisine selon l'une quelconque des revendications précédentes 1 à 6, **caractérisé en ce que** le plan de travail (1) et la partie du bord (4) sont fabriqués dans le même matériau.

8. Comptoir de cuisine selon l'une quelconque des revendications 1 à 7, **caractérisé en ce que** le comptoir de cuisine comprend en outre un panneau de fibres placé à l'intérieur du cadre contre le dessous (3) du plan de travail (1), lequel panneau de fibres permettant d'atténuer le son.

9. Procédé de fabrication d'un comptoir de cuisine en pierre naturelle, en céramique ou en composite, comprenant les étapes consistant à fournir un plan de travail (1) en céramique, en composite ou en pierre naturelle, dans lequel le plan de travail (1) comprend un dessus (2), un dessous (3) et des côtés ; coller un cadre au dessous (3) du plan de travail (1); et fournir une ou plusieurs parties de bord (4) en céramique, en composite ou en pierre naturelle sur un ou plusieurs côtés du plan de travail (1), **caractérisé en ce qu'**un dos (6) de chaque partie de bord (4) est relié au plan de travail (1) par l'intermédiaire d'un profilé de liaison (7) inclus dans le cadre, dans lequel une première face adhésive (11) du profilé de liaison (7) est collée au dessous (3) du plan de travail (1), dans lequel un second côté adhésif (13) est collé à un dos (6) de la partie de bord (4), dans lequel le profilé de liaison (7) comprend un côté incliné (14), dans lequel le côté incliné (14) du profilé de liaison (7) est dirigé vers un joint (15) entre le plan de travail (1) et la partie de bord (4), créant ainsi un espace interne (16) entre le dessous (3) du plan de travail (1), le dos (6) de la partie de bord (4), et le côté incliné (14) du profilé de liaison (7) pour collecter l'excès de colle.

10. Procédé selon la revendication 9, **caractérisé en ce que** le procédé comprend les étapes supplémentaires consistant à biseauter les côtés du plan de travail (1) pourvus d'une partie de bord (4), ainsi qu'à biseauter le dos (6) de chaque partie de bord (4), lequel dos biseauté (17) de chaque partie de bord (4) est positionné contre un côté biseauté (18) du plan de travail (1) pour former un joint d'onglet.

11. Procédé selon la revendication 9 ou 10, **caractérisé en ce qu'**une couche d'un adhésif approprié est appliquée sur le premier côté adhésif (11) du profilé de liaison (7) ou sur le second côté adhésif (13) du profilé de liaison (7), après quoi le premier côté adhésif (11) du profilé de liaison (7) ou le second côté adhésif (13) du profilé de liaison (7) est collé au dessous (3) du plan de travail (1).

12. Procédé selon la revendication 11, **caractérisé en ce qu'**une couche de l'adhésif approprié est appliquée sur celui qui reste parmi le premier côté adhésif (11) du profilé de liaison (7) et le second côté adhésif (13) du profilé de liaison (7), après quoi le dos (6) de la partie de bord (4) est collé au côté adhésif restant.

13. Procédé selon l'une quelconque des revendications précédentes 11 ou 12, **caractérisé en ce que** l'adhésif approprié est choisi dans le groupe constitué par l'adhésif époxy, l'adhésif polyuréthane, l'adhésif acrylique ou l'adhésif silicone.

14. Procédé selon l'une quelconque des revendications précédentes 9 à 13, **caractérisé en ce que** le procédé comprend en outre le collage d'un panneau de fibres à l'intérieur du cadre.

15. Utilisation du comptoir de cuisine selon l'une quelconque des revendications 1 à 8 ou procédé selon l'une quelconque des revendications 9 à 14 pour la finition des armoires de cuisine.
